# EUROPÄISCHE PATENTSCHRIFT

(11) **EP 2 723 585 B1**
(45) Veröffentlichungstag und Bekanntmachung des Hinweises auf die Patenterteilung: **13.09.2017**
(21) Anmeldenummer: 12725381.3
(22) Anmeldetag: 31.05.2012
(51) Int. Cl.: B60C 9/20

(54) **FAHRZEUGLUFTREIFEN**
PNEUMATIC VEHICLE TIRE
PNEUMATIQUE POUR AÉRONEF

(30) Priorität: 23.06.2011 DE 102011051288
(43) Veröffentlichungstag der Anmeldung: 30.04.2014
(73) Patentinhaber: Continental Reifen Deutschland GmbH, 30165 Hannover (DE)
(72) Erfinder: BLÜMEL, Viktor, 30459 Hannover (DE); NOJEK, Rafal, 30161 Hannover (DE); JUSTINE, Carole, 31535 Scharrel (DE)
(74) Vertreter: Finger, Karsten
(86) Internationale Anmeldenummer: PCT/EP2012/060231
(87) Internationale Veröffentlichungsnummer: WO 2012/175305

(56) Entgegenhaltungen:
- WO-A1-2011/082844
- WO-A1-2011/082845
- DE-A1- 19 534 808
- DE-A1-102008 045 506
- DE-A1-102009 025 850
- US-A- 6 082 423

## Beschreibung

Die Erfindung betrifft einen Fahrzeugluftreifen mit zwei oder mehr sich in einem Winkel kreuzenden, Festigkeitsträger aus Stahl aufweisenden Gürtellagen und mit einer, ein- oder mehrlagig ausgeführten, Festigkeitsträger aufweisenden Gürtelbandage, wobei die Festigkeitsträger der Gürtellagen ausschließlich aus Stahl sind, welche innerhalb jeder Gürtellage im Wesentlichen parallel und beabstandet zueinander angeordnet und in Kautschukmaterial eingebettet sind, wobei die Festigkeitsträger der Gürtellagen einen Winkel von 18° bis 45° mit der Umfangsrichtung des Reifens einschließen und wobei die Festigkeitsträger der Gürtelbandage aus einem nicht-metallischen Werkstoff sind, welche innerhalb der Festigkeitsträgerlage im Wesentlichen parallel und beabstandet zueinander in etwa in Reifenumfangsrichtung angeordnet sind und einen Heißschrumpf aufweisen.

Ein derartiger Fahrzeugluftreifen ist aus der US 6 082 423 A bekannt. Konstruktionen von Fahrzeugluftreifen sind dem Fachmann hinreichend bekannt. Radialluftreifen weisen u.a. einen Gürtel und häufig eine Gürtelbandage auf.

Der aus zwei oder mehr sich in einem Winkel kreuzenden Gürtellagen bestehende Gürtel sorgt für die Steifigkeit der Lauffläche in Längs- und Querrichtung. Dieses dient beim Fahren der Kraftübertragung, verbessert die Seitenführung und verringert den Abrieb des Reifens. Die aus einer oder mehreren umfangsorientierten Lagen bestehende Gürtelbandage dient im Wesentlichen dazu, zusätzlich Kräfte in Umfangsrichtung aufzunehmen, um beispielsweise das Reifenwachstums aufgrund von Fliehkräften im Betrieb des Reifens zu begrenzen. Die Gürtelbandage kann den Gürtel abdecken, oder aber auch kann die Gürtelbandage insgesamt oder können einzelne Bandagenlagen sich zwischen oder unter den Gürtellagen befinden.

Es ist bekannt und heutzutage üblich, Stahlkorde als Festigkeitsträger in den Gürtellagen des Gürtels einzusetzen. Die Stahlkorde sind innerhalb der Festigkeitsträgerlage im Wesentlichen parallel und beabstandet zueinander angeordnet sind und in Kautschukmaterial eingebettet. In PKW-Luftreifen verbaute Gürtellagen weisen häufig Stahlkorde der Konstruktion 2 x 0,30 mm auf, bei einer Einstellung von 80 epdm oder mehr. Die Kordkonstruktion 2 x 0,30 mm bedeutet, dass zwei Drähte (Filamente) von 0,30 mm Durchmesser miteinander zu einem Kord verdreht sind, so dass der Kord einen Durchmesser von ca. 0,60 mm hat. Die Korde dieses Durchmessers sind lagenbildend in Kautschuk eingebettet. Je größer der Korddurchmesser ist, desto mehr Kautschuk wird im allgemeinen für die Einbettung der Korde benötigt und desto schwerer ist jede Gürtellage und der Reifen.
Eine vorbeschriebene Gürtellage ist derart konstruiert, dass diese bei einer vorgegebenen Dehnung von 1% eine Spannung von ca. 20.000 N per dm Breite oder mehr aufweist. Nachteilig an den Gürtellagen mit vorgenannten Stahlkorden ist, dass diese vergleichsweise schwer an Gewicht und materialaufwendig sind.

Es ist ebenfalls bekannt und heutzutage üblich, Gürtelbandagen in Kombination mit Stahlgürteln einzusetzen. In Pkw-Luftreifen verbaute Gürtelbandagen weisen häufig ein oder zwei Lagen gummierte Nylonkorde der Konstruktion 940x2 bei 80 epdm auf. Nylon wird häufig verwendet, weil dieses Material einen Heißschrumpf aufweist, das heißt, es schrumpft bei Erhitzen. Das ist sowohl bei der Vulkanisation des Reifens als auch beim Hochgeschwindigkeitsbetrieb von Vorteil, weil die Gürtelbandage dann den Zusammenhalt des Gürtelpaketes fördert. Außerdem wird dadurch dagegen vorgebeugt, dass die Gürtelbandage beim Betrieb in Kompression gerät, was nachteilig für deren Dauerermüdungsbeständigkeit ist und zu Brüchen des Bandagenmaterials führen kann.

Zudem offenbart die DE 10 2009 025850 A1 eine Festigkeitsträgerlage für Gürtel von Fahrzeugluftreifen, deren Festigkeitsträger aus zwei zu einem Kord verdrehten Stahlfilamenten bestehen, wobei jedes Filament einen Durchmesser kleiner als 0,24 mm aufweist.

Aus der DE 10 2008 045506 A1 sind aus Filamenten verdrehte Festigkeitsträger aus synthetischen Materialien bekannt, wobei die Filamente einen Durchmesser zwischen 0,1 mm und 2,0 mm, vorzugsweise zwischen 0,2 mm und 0,5 mm aufweisen.

Aus der DE 195 34 808 A1 ist ein Fahrzeugluftreifen mit wenigstens zwei Gürtellagen bekannt, wobei die Festigkeitsträger wenigstens einer dieser Gürtellagen Monofilamente aus Polyester sind.

Aus den vorveröffentlichten Dokumenten WO A1-2011/082844 und WO-A1-2011/082845 ist jeweils ein Fahrzeugluftreifen mit Gürtellagen und Gürtelbandage bekannt, von denen in einem Anmeldungsgegenstand Stahlfestigkeitsträger und in der Gürtelbandage Festigkeitsträger aus nicht-metallischem Werkstoff angeordnet sind, während in dem anderen Anmeldungsgegenstand sowohl die Festigkeitsträger der Gürtellage als auch die Festigkeitsträger der Gürtelbandage aus nicht-metallischem Werkstoff bestehen. Die Gürtellagen beider vorgenannter Anmeldungen verhalten sich derart, dass diese bei vorgegebener Dehnung um 1% eine Spannung < 17.500 N per dm Breite aufweisen.

Die Bestrebungen der Reifenentwicklungen gehen beständig dahin, einen kostengünstigen Reifen mit geringem Gewicht bereitzustellen, bei dem aber die Performance auf einem hohen Niveau gehalten ist.

Es ist daher die Aufgabe der Erfindung, einen kostengünstigen Fahrzeugluftreifen geringen Gewichtes bereitzustellen, der aber dennoch eine gute Performance aufweist.

Die Aufgabe wird gelöst, indem mindestens eine Gürtellage bei vorgegebener Dehnung um 1% in Richtung der Festigkeitsträgerlängserstreckung eine Spannung < 19.000 N per dm Breite aufweist und indem eine Gürtellage bei vorgegebener Dehnung um 1% in Richtung der Festigkeitsträgerlängserstreckung eine niedrigere Spannung per dm Breite aufweist als die andere(n), und dass die Festigkeitsträger dieser einen Gürtellage einen größeren Winkel mit der Reifenumfangsrichtung einschließen als diejenigen der anderen Gürtellage(n).

Erfindungsgemäß ist erreicht, dass Festigkeitsträger mit verringertem Gewicht in den Gürtellagen eingesetzt werden, deren verringerter Modul durch entweder den vergleichsweise hohen Kraftaufbau bei Dehnung der Gürtelbandage kompensiert wird, oder dadurch, dass in der anderen Gürtellage ein hinreichend starkes Material verwendet wird. Die Kosten- und Gewichtsersparnis ist beispielsweise dadurch erzielbar, dass die Anzahl der eingesetzten Festigkeitsträger pro dm oder der Durchmesser der eingesetzten Festigkeitsträger reduziert ist. Die Festigkeitsträger mindestens einer Gürtellage können aus zu Korden verdrehten Filamenten bestehen, wobei jedes Filament z.B. einen Durchmesser kleiner als 0,24mm aufweist und die Einstellung kleiner oder gleich 80 epdm ist, oder aus Einzeldrähten von einem Durchmesser kleiner oder gleich 0,30mm bei einer Einstellung von ca. 110 oder 120 epdm.

Es ist eine hohe Performance erreicht, da im Betrieb des Reifens eine geeignete dynamische Bodenaufstandsfläche erhalten ist. Durch den Einsatz von Festigkeitsträgern mit verringertem Durchmesser in den Gürtellagen wird das Gewicht des Fahrzeugluftreifens vorteilhafterweise reduziert. Der erfindungsgemäße Reifen ist kostengünstig, weist aufgrund seines verringerten Gewichtes einen verbesserten Rollwiderstand auf und besitzt zudem eine verbesserte Hochgeschwindigkeitstauglichkeit.

Vorteilhaft ist es, wenn die Festigkeitsträger der Gürtellage Stähle aus dem Festigkeitsbereich High-Tensile (HT) oder Ultra-High-Tensile (UHT) sind. Die Festigkeitsträger des High-Tensile-Bereichs weisen, je nach Filamentdurchmesser, eine Bruchfestigkeit von etwa 3000 MPa bis 3500MPa auf, während entsprechende Festigkeitsträger des Ultra-High-Tensile-Bereichs eine um etwa 500 MPa höhere Festigkeit aufweisen.

Die Festigkeitsträger der Gürtelbandage sind bevorzugt Materialien aus den Klassen Polyester oder Polyamid. Es können ebenfalls Hybridkonstruktionen aus Zellulose basierten Materialien (wie z.B. Rayon oder Lyocell), aus PVA, PEN, POK, Vectran oder Aramid jeweils mit Polyester oder Nylon eingesetzt werden. Wesentlich ist, dass zumindest ein Material des Festigkeitsträgers Heißschrumpfeigenschaften besitzt.

Vorteilhaft ist, wenn die Festigkeitsträger der Gürtellage die Konstruktion 1 x 0,28, 1 x 0.29, 1 x 0,30, 1 x 0,31 oder 1 x 0.32 aufweisen und in jeder Gürtellage mit etwa 110 epdm angeordnet sind, und/ oder wenn nur eine Gürtelbandage verwendet wird, was zum Beispiel dadurch erreicht wird, dass der Festigkeitsträger der Gürtelbandage ein Polyester-Kord der Konstruktion 1440 x 2 bei 105 epdm ist. Bei dieser Kombination weist der Reifen einen besonders niedrigen Rollwiderstand auf, ohne Abstriche in anderen wesentlichen Eigenschaften aufweisen.

Wesentlich ist, dass die Konstruktionen der Festigkeitsträger der Gürtellagen und der Bandage aufeinander erfindungsgemäß eingestellt sind, um im Betrieb des Reifens eine geeignete dynamische Bodenaufstandsfläche zu erhalten. Die Gürtelbandage kann gespult sein und ein lückenhaftes Spulmuster aufweisen, derart, dass die effektive Korddichte verringert ist.

Da der erfindungsgemäße Reifen an Gewicht verringert ist, bietet sich der Einsatz in vergleichsweise schweren Notlaufreifen wie in einem SSR-Reifen oder einem Reifen mit einer radial innen an der Reifeninnenschicht angeordneten, selbsthaftenden viskosen Dichtschicht an.
Das "Mehrgewicht" dieser Notlaufreifen kann vorteilhafterweise durch die vorbeschriebene Gürtellagen- und Bandagenkonstruktion kompensiert werden. SSR-Reifen (Self-Supporting-Runflat) sind Reifen mit Verstärkungsprofilen in den Reifenseitenwänden, durch die der Reifen auch bei Entlüftung über eine gewisse Fahrstrecke selbsttragend erhalten bleibt. Reifen mit Dichtschicht, welche sich zwischen den Schultern unter dem Laufstreifen auf der Reifeninnenschicht befindet, zeichnen sich dadurch aus, dass, wenn ein Fremdkörper die Lauffläche des Fahrzeugluftreifens penetriert, dieser durch die Dichtschicht umschlossen wird und einem eventuellen Luftverlust durch quasi sofortiges Abdichten vorbeugt.

Ein bevorzugtes Beispiel einer erfindungsgemäßen Konstruktion eines PKW-Reifens der Reifendimension 205/55 R 16 weist einen 2-lagigen Gürtel aus HT-Stahl-Drähten der Konstruktion 1 x 0.30 bei etwa 110 epdm auf, wobei die HT-Stahl-Korde einen Winkel von 28° mit der Reifenumfangsrichtung einschließen, und weist eine 1-lagige Bandage mit Korden aus Polyester der Konstruktion 1440 x 2 bei in etwa 105 epdm auf, wobei die Korde aus Polyester in etwa in Reifenumfangsrichtung angeordnet sind und die Gürtellagen abdecken. Jede Gürtellage weist bei vorgegebener Dehnung um 1% in Richtung der Festigkeitsträgerlängserstreckung eine Spannung von etwa 16.500 N per dm Breite auf und die Gürtelbandage weist bei vorgegebener Dehnung um 1% eine Spannung von etwa 2.000 N per dm Breite auf. Im Betrieb des PKW-Reifens ist eine geeignete dynamische Bodenaufstandsfläche erhalten.

Ein anderes bevorzugtes Beispiel einer erfindungsgemäßen Konstruktion eines PKW-Reifens der Reifendimension 205/55 R 16 weist einen 2-lagigen Gürtel auf, wobei die 1. Gürtellage aus HT-Stahl-Drähten der Konstruktion 1 x 0.30 bei etwa 120 epdm besteht und einen Winkel von 32° mit der Reifenumfangsrichtung einschließt, die 2. Gürtellage aus HT-Stahl-Korden der Konstruktion 2 x 0.30 bei etwa 80 epdm besteht und einen Winkel von 24° mit der Reifenumfangsrichtung einschließt, und weist eine 1-lagige Bandage mit Korden aus Nylon der Konstruktion 940 x 2 bei in etwa 80 epdm auf, wobei die Korde aus Nylon in etwa in Reifenumfangsrichtung angeordnet sind und die Gürtellagen abdecken. Die 1. Gürtellage weist bei vorgegebener Dehnung um 1% in Richtung der Festigkeitsträgerlängserstreckung eine Spannung von etwa 18.500 N per dm Breite auf und die 2. Gürtellage weist bei vorgegebener Dehnung um 1% eine Spannung von etwa 24.000 N per dm Breite auf. Dieses Beispiel einer bevorzugten Konstruktion weist eine erhöhte Durchschlagsfestigkeit gegenüber Beschädigungen als das erste Beispiel auf.

Der erfindungsgemäße Fahrzeugluftreifen kann ein PKW-, Van-, oder ein Light Truck-Luftreifen sein.

## Patentansprüche

1. Fahrzeugluftreifen mit zwei oder mehr sich in einem Winkel kreuzenden, Festigkeitsträger aufweisenden Gürtellagen und mit einer, ein- oder mehrlagig ausgeführten, Festigkeitsträger aufweisenden Gürtelbandage,
wobei die Festigkeitsträger der Gürtellagen ausschließlich aus Stahl sind, welche innerhalb jeder Gürtellage im Wesentlichen parallel und beabstandet zueinander angeordnet und in Kautschukmaterial eingebettet sind, wobei die Festigkeitsträger der Gürtellagen einen Winkel von 18° bis 45° mit der Umfangsrichtung des Reifens einschließen, und wobei die Festigkeitsträger der Gürtelbandage aus einem nicht-metallischen Werkstoff sind, welche innerhalb der Festigkeitsträgerlage im Wesentlichen parallel und beabstandet zueinander in etwa in Reifenumfangsrichtung angeordnet sind und einen Heißschrumpf aufweisen, **dadurch gekennzeichnet, dass** mindestens eine Gürtellage bei vorgegebener Dehnung um 1% in Richtung der Festigkeitsträgerlängserstreckung eine Spannung 19.000 N per dm Breite aufweist, und dass eine Gürtellage bei vorgegebener Dehnung um 1% in Richtung der Festigkeitsträgerlängserstreckung eine niedrigere Spannung per dm Breite aufweist als die andere(n), und dass die Festigkeitsträger dieser einen Gürtellage einen größeren Winkel mit der Reifenumfangsrichtung einschließen als diejenigen der anderen Gürtellage(n).

2. Fahrzeugluftreifen nach Anspruch 1,
**dadurch gekennzeichnet, dass** die Festigkeitsträger der Gürtellage Stähle aus dem High-Tensile (HT) - oder aus dem Ultra-High-Tensile (UHT) - Festigkeitsbereich sind.

3. Fahrzeugluftreifen nach Anspruch 1,
**dadurch gekennzeichnet, dass** die Festigkeitsträger der Gürtelbandage Materialien aus den Klassen Polyester, Polyamid sind oder Hybridkonstruktionen aus Zellulose basierten Materialien (wie z.B. Rayon oder Lyocell), aus PVA, PEN, POK, Vectran oder Aramid jeweils mit Polyester oder Nylon sind.

4. Fahrzeugluftreifen nach Anspruch 2,
**dadurch gekennzeichnet, dass** die Festigkeitsträger der Gürtellage die Konstruktion 1 x 0,28, 1 x 0.29, 1 x 0,30, 1 x 0,31 oder 1 x 0.32 aufweisen und in jeder Gürtellage mit etwa 110 epdm angeordnet sind.

5. Fahrzeugluftreifen nach einem oder mehreren der vorangehenden Ansprüche, **dadurch gekennzeichnet, dass** der Festigkeitsträger der Gürtelbandage ein Polyester-Kord der Konstruktion 1440 x 2 bei 105 epdm ist.

6. Fahrzeugluftreifen nach einem oder mehreren der vorangehenden Ansprüche, **dadurch gekennzeichnet, dass** die Festigkeitsträger jeder Gürtellage einen Winkel von 27° bis 35°, vorzugsweise von etwa 28° mit der Reifenumfangsrichtung einschließen.

7. Fahrzeugluftreifen nach einem oder mehreren der vorangehenden Ansprüche, **dadurch gekennzeichnet, dass** die Gürtellagen geschnittene Gürtellagen sind.

8. Fahrzeugluftreifen nach einem oder mehreren der vorangehenden Ansprüche, **dadurch gekennzeichnet, dass** der Fahrzeugluftreifen Notlaufeigenschaften durch unterhalb des Gürtels im Reifenschulterbereich und innerhalb der Seitenwände des Reifens angeordnete, im Querschnitt mondsichelförmige, über den Umfang der Seitenwand ringförmig geschlossene Verstärkungsprofile aufweist.

9. Fahrzeugluftreifen nach einem oder mehreren der vorangehenden Ansprüche 1 - 7,
**dadurch gekennzeichnet, dass** der Fahrzeugluftreifen radial innen an der Reifeninnenschicht eine selbsthaftende viskose Dichtschicht aufweist.

## Claims

1. Pneumatic vehicle tyre with two or more bracing plies, intersecting one another at an angle and having reinforcing elements, and with a bracing bandage, made up of one or more plies and having reinforcing elements, wherein the reinforcing elements of the bracing plies are made exclusively of steel, and within each bracing ply are arranged substantially parallel to and at a distance from one another and are embedded in rubber material, wherein the reinforcing elements of the bracing plies form an angle of 18° to 45° with the circumferential direction of the tyre, and wherein the reinforcing elements of the bracing bandage are of a non-metallic material, are arranged within the reinforcing element ply substantially parallel to and at a distance from one another approximately in the circumferential direction of the tyre and have heat shrinkage properties, **characterized in that**, under a predetermined extension of 1% in the direction of the longitudinal extent of the reinforcing elements, at least one bracing ply has a tension of < 19 000 N per dm of width, and **in that**, under a predetermined extension of 1% in the direction of the longitudinal extent of the reinforcing elements, a bracing ply has a lower tension per dm of width than the other(s), and **in that** the reinforcing elements of this one bracing ply form a greater angle with the circumferential direction of the tyre than those of the other bracing ply (plies).

2. Pneumatic vehicle tyre according to Claim 1,
**characterized in that** the reinforcing elements of the bracing ply comprise steel cords from the high-tensile (HT) or ultra-high-tensile (UHT) strength range.

3. Pneumatic vehicle tyre according to Claim 1 **characterized in that** the reinforcing elements of the bracing bandage comprise materials from the classes of polyester or polyamide or hybrid structures of cellulose-based materials (such as e.g. rayon or lyocell), of PVA, PEN, POK, Vectran or aramid in each case with polyester or nylon.

4. Pneumatic vehicle tyre according to Claim 2,
**characterized in that** the reinforcing elements of the bracing ply have the structure 1 x 0.28, 1 x 0.29, 1 x 0.30, 1 x 0.31, or 1 x 0.32 and are arranged in each bracing ply with approximately 110 epdm.

5. Pneumatic vehicle tyre according to one or more of the preceding claims,
**characterized in that** the reinforcing element of the bracing bandage comprises a polyester cord of the structure 1440 × 2 with 105 epdm.

6. Pneumatic vehicle tyre according to one or more of the preceding claims,
**characterized in that** the reinforcing elements of each bracing ply form an angle of 27° to 35°, preferably of approximately 28°, with the circumferential direction of the tyre.

7. Pneumatic vehicle tyre according to one or more of the preceding claims,
**characterized in that** the bracing plies are cut bracing plies.

8. Pneumatic vehicle tyre according to one or more of the preceding claims,
**characterized in that** the pneumatic vehicle tyre has runflat properties by way of cross-sectionally crescent-shaped reinforcing profiles arranged under the belt in the shoulder region of the tyre and within the sidewalls of the tyre, and closed in an annular manner over the circumference of the sidewall.

9. Pneumatic vehicle tyre according to one or more of the preceding Claims 1-7,
**characterized in that** the pneumatic vehicle tyre has radially inwards on the inner layer of the tyre a self-adhesive viscous sealing layer.

## Revendications

1. Bandage pneumatique pour roue de véhicule présentant deux ou plusieurs couches de ceinture qui présentent des renforts et qui se croisent obliquement et un bandage de ceinture réalisé en une ou plusieurs couches et présentant des renforts, les renforts des couches de ceinture étant exclusivement réalisés en acier et à l'intérieur de chaque couche de ceinture étant disposés essentiellement parallèlement les uns aux autres et à distance mutuelle et étant incorporés dans un matériau de caoutchouc, les renforts des couches de ceinture formant un angle de 18° à 45° avec la direction périphérique du bandage de roue, et les renforts du bandage de ceinture étant constitués d'un matériau non métallique, étant disposés à l'intérieur de la couche de renfort essentiellement parallèlement les uns aux autres et à distance mutuelle, sensiblement dans la direction périphérique du bandage de roue et présentant un retrait à la chaleur, **caractérisé en ce qu'**au moins une couche de ceinture présente une tension < 19 000 N par dm de largeur pour un allongement prédéterminé de 1 % dans la direction de l'extension longitudinale des renforts, et **en ce qu'**une couche de ceinture présente pour un allongement prédéterminé de 1 % dans la direction de l'extension longitudinale des renforts une plus faible tension par dm de largeur que la ou les autres, et **en ce que** les renforts de cette couche de ceinture forment un plus grand angle avec la direction périphérique du bandage de roue que ceux de la ou des autres couches de ceinture.

2. Bandage pneumatique pour roue de véhicule selon la revendication 1, **caractérisé en ce que** les renforts de la couche de ceinture sont des câbles en acier de la plage de résistance en traction élevée (HT) ou ultra-élevée (UHT).

3. Bandage pneumatique pour route de véhicule selon la revendication 1, **caractérisé en ce que** les renforts du bandage de ceinture sont réalisés en matériaux des classes du polyester et du polyamide ou sont des structures hybrides en matériaux à base de cellulose (comme, par exemple, la rayonne ou le Lyocell), en PVA, en PEN, en POK, en Vectran ou en aramide dans chaque cas avec du polyester ou du nylon.

4. Bandage pneumatique pour roue de véhicule selon la revendication 2, **caractérisé en ce que** les renforts de la couche de ceinture présentent une structure 1 x 0,28, 1 x 0,29, 1 x 0,30, 1 x 0,31 ou 1 x 0,32 et sont disposés dans chaque couche de ceinture à environ 110 epdm.

5. Bandage pneumatique pour roue de véhicule selon l'une ou plusieurs des revendications précédentes, **caractérisé en ce que** le renfort de bandage de ceinture est un câble de polyester de structure 1 440 x 2 à 105 epdm.

6. Bandage pneumatique pour roue de véhicule selon l'une ou plusieurs des revendications précédentes, **caractérisé en ce que** les renforts de chaque couche de ceinture forment un angle de 27° à 35° et de préférence d'environ 28° avec la direction périphérique du bandage de roue.

7. Bandage pneumatique pour roue de véhicule selon l'une ou plusieurs des revendications précédentes, **caractérisé en ce que** les couches de ceinture sont des couches de ceinture découpées.

8. Bandage pneumatique pour roue de véhicule selon l'une ou plusieurs des revendications précédentes, **caractérisé en ce que** le bandage pneumatique pour roue de véhicule présente des propriétés de roulage de secours grâce à des profilés de renfort en anneau fermé disposés au-dessus de la périphérie de la paroi latérale, en forme de croissant de lune en section transversale, disposés en dessous de la ceinture dans la zone d'épaulement du bandage de roue et à l'intérieur des parois latérales du bandage de roue.

9. Bandage pneumatique pour roue de véhicule selon l'une ou plusieurs des revendications 1 à 7 qui précèdent, **caractérisé en ce que** le bandage pneumatique pour roue de véhicule présente du côté radialement intérieur une couche de recouvrement visqueuse auto-adhésive sur la couche intérieure du bandage de roue.
